# FASCICULE DE BREVET EUROPEEN

(11) **EP 4 320 832 B1**
(45) Date de publication et mention de la délivrance du brevet: **08.04.2026**
(21) Numéro de dépôt: 22734339.9
(22) Date de dépôt: 02.06.2022
(51) Int. Cl.: H04L 27/26

(54) **PROCÉDÉ ET SYSTÈME DE TRANSMISSION RADIO POINT-A-POINT MULTICANAUX AVEC LIMITATION DES PERTES DE COUPLAGE**
VERFAHREN UND SYSTEM ZUR PUNKT-ZU-PUNKT ÜBERTRAGUNG MIT BEGRENZUNG VON KOPPLUNGSVERLUSTEN
METHOD AND SYSTEM OF POINT-TO-POINT TRANSMISSION WITH LIMITING COUPLING LOSSES

(30) Priorité: 03.06.2021 FR 2105844
(43) Date de publication de la demande: 14.02.2024
(73) Titulaire: Spectronite, 06410 Biot (FR)
(72) Inventeur: FOURNIER, Jean-Philippe, 06250 MOUGINS (FR)
(74) Mandataire: de Jong, Jean Jacques
(86) Numéro de dépôt international: PCT/FR2022/051046
(87) Numéro de publication internationale: WO 2022/254152

(56) Documents cités:
- US-A1- 2012 087 668
- US-A1- 2012 182 948
- US-A1- 2015 139 348
- US-A1- 2017 034 317
- US-A1- 2017 201 288
- US-A1- 2018 110 051
- US-B1- 7 072 411
- US-B2- 10 594 526
- YUNLONG CAI ET AL: "Modulation and Multiple Access for 5G Networks", ARXIV.ORG, CORNELL UNIVERSITY LIBRARY, 201 OLIN LIBRARY CORNELL UNIVERSITY ITHACA, NY 14853, 21 February 2017 (2017-02-21), XP080748502, DOI: 10.1109/COMST.2017.2766698
- PUI-IN MAK ET AL: "Transceiver architecture selection: Review, state-of-the-art survey and case study", IEEE CIRCUITS AND SYSTEMS MAGAZINE, IEEE SERVICE CENTER, NEW YORK, NY, US, vol. 7, no. 2, 1 April 2007 (2007-04-01), pages 6 - 25, XP011191643, ISSN: 1531-636X
- NORTEL NETWORKS: "Analysis of Node B Impacts", 3GPP DRAFT; R1-040295, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Malaga, Spain; 20040214, 14 February 2004 (2004-02-14), XP050098619

## Description

La présente invention concerne les transmissions point-à-point par ondes radio utilisées notamment dans les réseaux de transport formant l'infrastructure des réseaux mobiles, ou encore dans certains réseaux radio privés. Typiquement, ces transmissions sont réalisées dans des bandes de fréquences situées entre 6 et 42 GHz.

Avec l'avènement de nouveaux usages liés à la démocratisation de l'accès à Internet par l'intermédiaire des réseaux mobiles, les opérateurs de réseaux mobiles ont un besoin grandissant d'augmenter la capacité de leurs réseaux. Ainsi, les débits offerts par les liaisons point-à-point ont été significativement augmentés grâce à l'utilisation de nouvelles techniques, notamment de nouvelles techniques de modulation de plus en plus complexes comme MAQ2048 ou MAQ4096. Cependant, les débits des liaisons point-à-point restent limités par la largeur des bandes de fréquences attribuées à ces liaisons.

Par ailleurs, augmenter la largeur des canaux de transmission est un processus très complexe du fait que ces canaux sont définis par des règlementations internationales et donc ne peuvent pas évoluer rapidement. En outre, de telles liaisons de transmission radio point-à-point sont en service depuis plusieurs dizaines d'années. Le spectre radio a donc déjà été alloué sous forme de canaux de largeur définie, et le spectre radio encore disponibles est donc constitué de canaux étroits et pour la plupart non adjacents.

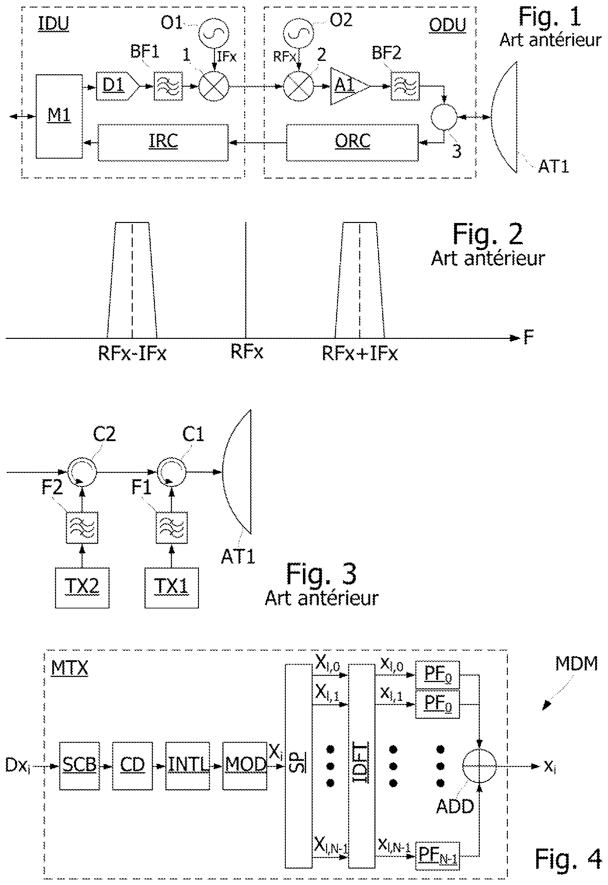

La figure 1 représente un système de transmission monocanal traditionnel. Ce système comprend une unité interne IDU et une unité externe ODU couplée à une antenne AT1. L'unité externe ODU doit être placée au plus près de l'antenne AT1, tandis que l'unité interne IDU peut être placée à distance, par exemple dans un local où elle peut être facilement accessible pour des opérations de maintenance. L'unité interne IDU comprend un modem M1 gérant l'émission et la réception d'un signal radio. Le signal numérique de sortie, côté émission, du modem M1 est converti par un convertisseur numérique/analogique D1 en un signal analogique qui est filtré par un filtre passe-bande BF1, le signal analogique filtré étant fourni à un premier mélangeur de fréquence 1 pour appliquer au signal analogique une translation d'une fréquence intermédiaire IFx générée par un oscillateur local O1. La porteuse IFx modulée est transmise à l'unité externe ODU où elle est convertie à une fréquence de porteuse finale RFx+IFx par un second mélangeur de fréquence 2 recevant par ailleurs une porteuse intermédiaire à la fréquence RFx d'un oscillateur local O2. Le signal en sortie du mélangeur de fréquence 2 est amplifié par un amplificateur A1, puis filtré par un filtre passe-bande BF2. Le filtre BF2 est relié à l'antenne AT1 par l'intermédiaire d'un duplexeur 3 à trois voies, tel qu'un circulateur mécanique, pour relier l'antenne également à une chaine de réception ORC-IRC.

Le modem M1, le convertisseur D1 et le mélangeur de fréquence 1 de la fréquence intermédiaire IFx sont aujourd'hui communément intégrés dans un circuit modem dédié. Le mélangeur de fréquence 2 vers la porteuse finale est également communément intégré dans un circuit de puissance intégré dédié, le signal étant transmis du circuit modem vers le circuit de puissance à la fréquence IFx.

Le spectre du signal de sortie du mélangeur 2 est représenté sur la figure 2. Ce signal comporte trois composantes, à savoir deux composantes centrées respectivement sur les fréquences RFx-IFx et RFx+IFx et modulées par le signal analogique issu du modem M1, et une composante à la fréquence RFx. Le filtre passe-bande BF2 permet d'éliminer l'une des deux images du signal modulé centrées sur les fréquences RFx-IFx et RFx+IFx, ainsi que la porteuse à la fréquence RFx. Or la fréquence finale RFx+IFx est généralement supérieure à 6 GHz et la fréquence IFx est inférieure à 400 MHz pour que le signal puisse être transmis sans pertes excessives entre l'unité interne IDU et l'unité externe ODU. Le filtre BF2 doit donc être très sélectif. Aux fréquences concernées, seuls des filtres mécaniques ou filtres à cavité permettent d'atteindre le niveau de réjection requis. Or, les filtres à cavité sont particulièrement complexes et coûteux à fabriquer.

Il a également été proposé de coupler plusieurs canaux pour augmenter le débit de transmission. A cet effet, comme illustré par la f igure 3, plusieurs chaines d'émission mono-canal TX1, TX2 sont couplées à l'antenne AT1. A cet effet, des circulateurs mécaniques C1, C2 à trois voies sont utilisés à la place du duplexeur 3, et connectés en série à l'antenne AT1. Pour qu'une chaine d'émission TX2 séparée de l'antenne par plusieurs circulateurs C1, C2 puisse atteindre l'antenne, la liaison entre chaque chaine d'émission et son circulateur doit être équipée d'un filtre F1, F2 ayant un fort coefficient de réflexion, pour réfléchir le signal émis par la chaine TX2 vers la voie du circulateur C1 reliée à l'antenne. Ainsi, le signal émis par la chaine TX2 est transmis par les circulateurs C2 et C1 vers le filtre F1, lequel réfléchit le signal reçu vers l'antenne AT1.

De manière symétrique, plusieurs chaines de réception mono-canal peuvent être couplées à une même antenne respectivement par un circulateur et un filtre sélectif adapté au canal de réception correspondant.

Il en résulte que les filtres F1, F2 doivent non seulement être passants uniquement pour le signal émis par la chaine d'émission TX1, TX2 à laquelle il est connecté, mais également présenter un fort coefficient de réflexion pour les signaux émis par les autres chaines d'émission reliées à l'antenne. Il s'avère que les filtres F1, F2 requis sont encore plus sélectifs que le filtre BF2 disposé en sortie de la chaine d'émission représentée sur la figure 1, et donc sont encore plus complexes et coûteux.

En outre, il est difficile d'obtenir des coefficients de réflexion élevés. Il en résulte que les signaux à transmettre subissent de fortes atténuations lorsqu'ils traversent les circulateurs. Ainsi, la traversée de deux circulateurs en émission et en réception peut induire une perte de puissance pouvant atteindre 6 dB représentant trois-quarts de la puissance radio dissipée en chaleur dans les filtres et circulateurs. En outre, les filtres à cavité sont structurellement adaptés aux fréquences à filtrer, de sorte qu'une modification de canal de transmission nécessite le remplacement des filtres correspondants.

Ces pertes de puissance radio se traduisent donc pas une augmentation significative de la consommation électrique nécessaire pour atteindre une puissance de transmission donnée.

Les technologies de fabrication des filtres à cavité imposent également une limite en fréquence. Il n'existe pratiquement pas de solution permettant de réaliser des filtres à cavité fonctionnant à des fréquences supérieures à 13 GHz, sachant que les bandes de fréquence disponibles visées atteignent 42 GHz.

Il a également été proposé un système à deux porteuses ou à deux canaux, comportant un modem générant deux porteuses qui sont modulées séparément et transmises vers l'unité externe à une première fréquence intermédiaire. L'unité externe réalise une conversion analogique / numérique et un filtrage numérique pour isoler les deux porteuses. L'unité externe réalise ensuite une translation en fréquence de ces deux porteuses pour les placer à des fréquences combinant la position initiale de chaque porteuse par rapport à la première fréquence intermédiaire et la seconde fréquence intermédiaire utilisée pour translater les deux porteuses vers la fréquence finale.

Ce système doit effectuer plusieurs conversions, analogiques / numériques et inverse, ce qui génère un nombre important d'images parasites qu'il faut ensuite filtrer. Les positions des porteuses en sortie du modem autour de la première fréquence intermédiaire et de la seconde fréquence intermédiaire imposent des contraintes fortes quant aux caractéristiques du filtre qui doit traiter les images des deux canaux et éliminer les images parasites. En outre, la complexité de ce système s'accroit de manière exponentielle si l'on souhaite augmenter le nombre de canaux. En pratique, ce nombre peut difficilement être étendu au-delà de deux.

Il a également été proposé une technique de modulation à sous porteuses OFDM ("Orthogonal Frequency-Division Multiplexing") permettant d'effectuer par groupement de sous-porteuses une transmission multi-canaux. Cependant, l'efficacité spectrale d'une telle technique diminue rapidement si l'on diminue la largeur des canaux.

US 2017/034317 A1 (KENNEY THOMAS J [US] ET AL) 2 février 2017 (2017-02-02) D1 décrit un système OFDM avec une logique qui analyse un flux de données en deux ou plusieurs segments de fréquence ayant une bande passante totale supérieure à 160 mégahertz, contigus ou non contigus. Le signal OFDM comprend un intervalle de garde et une composante directe nulle, DC.

US 2012/182948 A1 (HUANG XIAOJING [AU] ET AL) 19 juillet 2012 (2012-07-19) propose des sous-bandes de groupes, parmi un ensemble de canaux de fréquences radio de transmission attribués à un terminal, dans une pluralité de sous-bandes agrégées, et alloue des données à au moins certaines desdites sous-bandes agrégées. La solution proposée concerne un système multi-canaux, sauf bande de garde. Canaux non-utilisés portent nuls.

Il est donc souhaitable de pouvoir augmenter le débit des liaisons radio multicanaux point-à-point en utilisant les bandes de fréquences disponibles. Il est également souhaitable d'éviter d'avoir à utiliser des filtres mécaniques sélectifs et donc coûteux. Il peut également être souhaitable de réaliser un système de transmission multicanaux dont le nombre et la largeur des canaux peuvent être modifiés.

Des modes de réalisation concernent un procédé de transmission de données, comprenant des étapes consistant à : générer à partir d'un flux de données à émettre, une pluralité de flux d'échantillons numériques fréquentiels, chaque flux d'échantillons numériques contenant une partie du flux de données à émettre et modulant une sous-porteuse respective définissant un canal de sous-porteuse respectif, l'ensembles des canaux de sous-porteuse couvrant une bande de fréquences, convertir les flux d'échantillons numériques fréquentiels en des flux d'échantillons numériques temporels, par une transformée spectrale inverse, combiner les flux d'échantillons numériques temporels en un flux composite d'échantillons numériques temporels, translater en fréquence le flux composite d'échantillons numériques temporels, à l'aide d'un oscillateur numérique à une fréquence intermédiaire supérieure à 1 GHz, convertir le flux composite d'échantillons translaté en un signal analogique, translater en fréquence le signal analogique à une fréquence finale de transmission supérieure à 2 GHz, à l'aide d'un oscillateur analogique à une fréquence de translation, filtrer le signal analogique afin d'atténuer la fréquence de translation, et émettre le signal analogique translaté par une antenne.

Selon un mode de réalisation, le procédé comprend une étape de filtrage de chaque flux d'échantillons numériques temporels par un filtre numérique respectif avant de générer le flux composite d'échantillons numériques temporels.

Selon un mode de réalisation, le flux composite d'échantillons numériques temporels est transmis par une liaison optique avant d'être translaté à la fréquence intermédiaire.

Selon un mode de réalisation, les canaux de sous-porteuses sont regroupés en canaux de transmission divisant une bande de fréquences, l'un des canaux de transmission rassemblant des canaux de sous-porteuse non utilisés pour transmettre des flux de données.

Selon un mode de réalisation, le procédé comprend des étapes consistant à : générer en parallèle plusieurs flux composites d'échantillons numériques temporels, et translater chacun des flux composites d'échantillons numériques temporels, vers une fréquence intermédiaire respective à l'aide d'un oscillateur numérique respectif, chacun des flux composites d'échantillons numériques temporels translaté étant transmis sous forme analogique dans une bande de fréquences respective.

Selon un mode de réalisation, le flux de données à émettre subit un traitement d'embrouillage pour que des bits du flux présentent une distribution aléatoire, un traitement de codage pour introduire dans le flux des données de redondance ou de correction d'erreur, un traitement d'entrelacement formant un flux de blocs de données, et un traitement de modulation pour transformer le flux de blocs de données en un flux d'échantillons fréquentiels sous forme de nombres complexes.

Selon un mode de réalisation, plusieurs traitements d'embrouillage et de codage sont effectués en parallèle pour augmenter une cadence de transmission du flux de données transmis au traitement d'entrelacement.

Des modes de réalisation concernent également un procédé de réception de données comprenant des étapes consistant à : recevoir un signal analogique par une antenne, translater le signal analogique reçu à une fréquence intermédiaire supérieure à 1 GHz et inférieure à une fréquence de transmission du signal analogique supérieure à 2 GHz, à l'aide d'un oscillateur analogique à une fréquence de translation, filtrer le signal analogique afin d'atténuer la fréquence de translation, convertir le signal analogique en un flux composite d'échantillons numériques à la fréquence intermédiaire, translater le flux composite d'échantillons numériques temporels, vers une bande de base à l'aide d'un oscillateur numérique à la fréquence intermédiaire, générer, à partir du flux composite d'échantillons numériques en bande de base, à l'aide d'une transformée spectrale, une pluralité de flux d'échantillons numériques fréquentiels, chaque flux d'échantillons numériques fréquentiels étant associé à une sous-porteuse définissant un canal de sous-porteuse respectif, et générer un flux de données transmises à partir des flux d'échantillons numériques fréquentiels.

Des modes de réalisation concernent également un dispositif de transmission configuré pour mettre en œuvre l'un ou l'autre des procédés précédemment définis.

Selon un mode de réalisation, le dispositif comprend un modem pour générer le flux composite d'échantillons numériques temporels, un convertisseur pour translater le flux composite d'échantillons numériques temporels, vers la fréquence intermédiaire et convertir en signaux analogiques le flux composite d'échantillons translaté à la fréquence intermédiaire, et un étage analogique connecté à une antenne pour générer les signaux analogiques translatés.

Selon un mode de réalisation, le modem est connecté au convertisseur par une liaison optique.

Selon un mode de réalisation, le dispositif comprend une pluralité de modems connectés à une entrée respective du convertisseur.

Selon un mode de réalisation, le dispositif comprend un circuit de conversion parallèle / série comprenant une pluralité d'entrées connectées respectivement aux modems, et un circuit de conversion série / parallèle relié au circuit de conversion parallèle / série par une liaison à fibre optique et comprenant une sortie par modem connectée à l'entrée d'un circuit de conversion de fréquence respectif pour translater le flux composite d'échantillons numériques temporels fourni par un modem respectif, vers une fréquence intermédiaire respective.

Selon un mode de réalisation, chaque modem est réalisé par un processeur commandé par un programme ou un circuit programmable. L'invention est définie par les revendications indépendantes 1 et 6.

Des exemples de réalisation de l'invention seront décrits dans ce qui suit, à titre non limitatif en relation avec les figures jointes parmi lesquelles :
la figure 1 décrite précédemment, représente un système traditionnel de transmission monocanal,
la figure 2 décrite précédemment, représente un spectre fréquentiel d'un signal à émettre par le système de transmission de la figure 1,
la figure 3 décrite précédemment, illustre un dispositif permettant de générer un signal réparti dans plusieurs canaux de transmission,
la figure 4 représente schématiquement la partie émission d'un modem numérique de transmission multi-canaux, selon un mode de réalisation,
la figure 5 représente schématiquement un exemple de spectre du signal produit par la chaine d'émission,
la figure 6 représente schématiquement un autre exemple de spectre du signal produit par la chaine d'émission,
la figure 7 représente schématiquement la partie réception d'un modem numérique de transmission multi-canaux, selon un mode de réalisation,
la figure 8 représente schématiquement une unité externe d'un système de transmission multi-canaux, selon un mode de réalisation,
la figure 9 représente schématiquement un exemple de spectre d'un signal émis par le système de transmission multi-canaux, selon un mode de réalisation,
la figure 10 représente schématiquement un exemple de gabarit d'un filtre du système de transmission multi-canaux par rapport à des canaux de transmission mis en œuvre par chaine d'émission,
la figure 11 représente schématiquement un autre mode de réalisation d'une chaine d'émission numérique d'un système de transmission multi-canaux,
les figures 12A, 12B, 12C [Fig. 12] représentent schématiquement des exemples de spectres de signaux internes de l'émetteur multi-canaux de la figure 11,
la figure 13 représente schématiquement un mode de réalisation d'une unité de conversion de la chaine d'émission du système de transmission multi-canaux de la figure 11,
la figure 14 représente schématiquement la chaine d'émission d'un système de transmission multi-canaux selon un autre mode de réalisation.

La figure 4 représente une partie émission MTX d'un modem numérique MDM d'un système de transmission de données numériques. La partie émission MTX peut être de type OFDM ("Orthogonal Frequency-Division Multiplexing"). Selon un mode de réalisation, la partie émission MTX est configurée pour effectuer une transmission multi-canaux dans une bande de fréquences attribuée. La partie émission MTX reçoit des données numériques à transporter Dxᵢ d'une interface physique, par exemple de type Ethernet, qui peut être connectée à un commutateur externe fournissant les données à transporter. La partie émission MTX comprend des modules d'embrouillage SCB, de codage CD, d'entrelacement INTL, et de modulation MOD, un circuit de sérialisation SP, un circuit de transformation IDFT du domaine fréquentiel au domaine temporel et un sommateur ADD. Le module d'embrouillage SCB est configuré pour traiter le flux de données binaires reçu afin que les bits du flux présentent une distribution aléatoire, prédéfinie, pour éviter les longues séquences de bits de même valeur. Le module de codage CD introduit dans la chaine brouillée des données de redondance ou de correction d'erreur.

Le module d'entrelacement INTL reçoit les signaux de sortie du codeur CD pour les entrelacer entre eux et former des blocs de données. Le modulateur MOD reçoit les blocs de données en sortie du module d'entrelacement INTL pour les moduler en produisant des échantillons fréquentiels Xᵢ sous la forme de nombres complexes répartis suivant une constellation de modulation à plusieurs états. La modulation appliquée peut être par exemple une modulation en amplitude en quadrature QAM ("Quadrature amplitude modulation"), ou une modulation de type PSK (Phase Shift Keying) comme BPSK (Binary PSK) ou QPSK (Quadrature PSK). Le circuit de sérialisation SP répartit les échantillons fréquentiels modulés Xᵢ issus du modulateur MOD en vecteurs X_{I} = (X_{I,0}, ..., X_{I,N-1}) de taille N, N étant supérieur à 1.

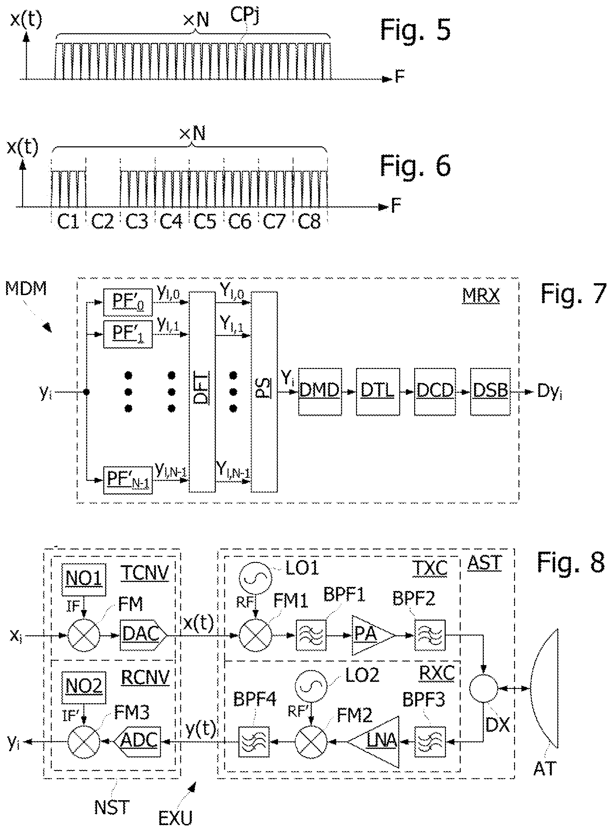

Le circuit de transformation IDFT réalise une transformation du domaine fréquentiel au domaine temporel en transformant les vecteurs fréquentiels X_{I} = (X_{I,0}, ..., X_{I,N-1}) en symboles numériques temporels x_{I} = (x_{I,0}, ..., X_{I,N-1}) formé de N échantillons temporels x_{I,0}, ..., X_{I,N-1}. Cette transformation est réalisée en appliquant une transformée spectrale inverse d'ordre N aux échantillons modulés X_{I,0}, ..., X_{I,N-1} fournis par le modulateur MOD. La transformée spectrale inverse peut être par exemple une transformée de Fourier rapide inverse ou une transformée en ondelettes inverse. Le signal numérique x(t) constitué des symboles x_{I} ainsi produit présente un spectre d'amplitude tel qu'illustré sur la figure 5. Chaque échantillon x_{I,j} produit correspond à une sous-porteuse j modulée, la largeur de la bande de fréquence attribuée à la transmission étant divisée en N canaux de sous-porteuse CPⱼ correspondant chacun à une sous-porteuse.

La fréquence la plus élevée de la bande de fréquence attribuée peut correspondre à la fréquence la plus élevée du canal de sous-porteuse situé aux fréquences les plus élevées, et la fréquence la plus basse de la bande de fréquences attribuée peut correspondre à la fréquence la plus basse du canal de sous-porteuse situé aux fréquences les plus basses. De cette manière, plus le nombre N de canaux de sous-porteuse est élevé, moins la largeur des canaux de sous-porteuse est grande, et plus la fréquence de travail du modem MDM, qui dépend aussi de la largeur totale de la bande de fréquences traitée, est élevée.

Selon un mode de réalisation, les canaux de sous-porteuse sont regroupés en canaux de transmission. Dans le domaine des transmissions micro-ondes, les régulations internationales imposent des largeurs de canaux de transmission prédéfinies. En fonction des pays et de la fréquence de transmission (6GHz ou 38 GHz par exemple), les largeurs de canaux de transmission sont imposées. Typiquement, les largeurs de canaux de transmission sont de 3,5 MHz, 7 MHz, 14 MHz, 28 MHz, 40 MHz, 56 MHz ou 112 MHz. Les standards internationaux de télécommunication (définis par l'UIT) imposent des gabarits d'émission pour limiter les interférences générées hors de chacun des canaux de transmission. Plus les canaux de transmission sont étroits, plus le niveau d'énergie hors-canal doit être faible.

Il s'avère que la valeur d'un dernier échantillon x_{I-1,N-1} d'un symbole x_{I-1} peut être très différente de celle du premier échantillon x_{I,0} du symbole xi suivant. Cette discontinuité génère des composantes haute-fréquence dans le spectre du signal temporel résultant de la concaténation des symboles classiquement réalisée par un sérialiseur ou convertisseur parallèle/série, ainsi que des interférences entre canaux de sous-porteuses. Pour éviter ces inconvénients, des préfixes cycliques sont insérés classiquement entre les symboles en sortie du circuit de transformation IDFT. Chaque préfixe cyclique est constitué d'échantillons calculés par application d'un fenêtrage entre les échantillons aux extrémités de chaque symbole et d'une fonction de type cosinus carré, de manière à ce que les échantillons à chaque extrémité du symbole et de son préfixe cyclique s'annulent, limitant ainsi le niveau des composantes haute-fréquence du signal résultant et donc le niveau d'énergie dissipée en dehors du canal de sous-porteuse correspondant.

Les préfixes cycliques permettent de rendre la transmission plus robuste dans le cas de transmission multi-trajet, ce qui est essentiel dans le domaine des transmissions mobiles, classiquement d'une station-relais vers un téléphone mobile. Ils permettent également de diminuer la quantité d'énergie transmise en dehors de chaque canal de sous-porteuse. Cette quantité d'énergie peut être diminuée en augmentant le rapport entre la durée de chaque préfixe cyclique et la durée du symbole, ou en réduisant l'espacement entre les sous-porteuses. Si la largeur de la bande fréquences attribuée est fixe, la réduction de l'espacement entre les sous-porteuses est effectuée par une augmentation de l'ordre N de la transformée spectrale, ce qui diminue la largeur des canaux de sous-porteuse. Or, la réalisation de transmissions dans des canaux de transmission très étroits (3,5 MHz ou 7 MHz) et donc la mise en œuvre d'un ordre N élevé de la transformée spectrale et un gabarit de transmission extrêmement contraint, augmente considérablement la complexité de la partie émission MTX du modem MDM.

Par ailleurs, augmenter la durée des préfixes cycliques réduit significativement l'efficacité spectrale du système de transmission, du fait qu'une fraction grandissante du temps d'émission est occupée par la transmission des préfixes cycliques, la part consacrée à la transmission des données utiles étant réduite d'autant.

Selon un mode de réalisation, la partie émission MTX du modem MDM n'insère pas de préfixes cycliques entre les symboles xi, mais comprend un ensemble de N filtres numériques PF₀-PF_{N-1} recevant respectivement les N échantillons x_{I,0}, ..., x_{I,N-1} de chaque symbole xi, le nombre de canaux de sous-porteuses étant fixe. Les filtres numériques PF₀-PF_{N-1} présentent une réponse fréquentielle configurée pour atténuer considérablement les émissions hors des N canaux de sous-porteuses respectivement, et une réponse impulsionnelle permettant de limiter les discontinuités entre les échantillons extrêmes X_{I-1,N-1} et x_{I,0} de paires de symboles consécutifs x_{I-1}, x_{I}. A cet effet, les filtres PF₀-PF_{N-1} sont par exemple de type polyphase, comme les filtres PHYDYAS, IOTA (Isotropic Orthogonal Transform Algorithm), et MMB (Martin - Mirabassi - Bellange).

Ainsi, grâce à la suppression des préfixes cycliques et le filtrage des sous-porteuses, l'efficacité spectrale reste constante quelle que soit la largeur des canaux de sous-porteuse. Le nombre N de sous-porteuses étant fixe, la largeur des canaux de sous-porteuse dépend de la largeur de la bande de fréquence attribuée à la transmission. La suppression des préfixes cycliques permet également de conserver une même efficacité spectrale lorsque la largeur des canaux de sous-porteuses est modifiée.

En outre, le niveau d'émission hors-canal peut être réduit en dessous des niveaux exigés par les gabarits de transmission définis pour les canaux, y compris lorsque les canaux sont plus larges. En s'affranchissant ainsi des émissions hors-canal, l'ordre N de la transformée de Fourier inverse peut être réduit par rapport à une solution de transmission OFDM, ce qui permet de simplifier la complexité d'implémentation du modem.

Selon un mode de réalisation, des échantillons nuls sont attribués à certaines composantes X_{I,j} des vecteurs X_{I} = (X_{I,0}, ..., X_{I,N-1}) de taille N fournis en entrée du circuit de transformation IDFT pour ne transmettre aucun signal dans certains canaux de transmission. Il est ainsi possible de réaliser une transmission multicanaux, n'occupant que des canaux sélectionnés, à l'intérieur d'une bande de fréquence couverte par le modem MDM.

La f igure 6 représente un exemple de spectre du signal numérique x(t) produit en sortie du modem MDM. Dans l'exemple de spectre de la figure 6, les N canaux ou sous-porteuses sont répartis dans des groupes C1, C2, ... C8 de quatre canaux formant des canaux de transmission, le groupe C2 ne recevant que des échantillons nuls pour ne pas émettre dans les canaux de ce groupe.

De cette manière, le modem MDM peut effectuer une transmission multicanaux, dans laquelle la largeur des canaux de transmission est définie en groupant des sous-porteuses par canal et transmettant des échantillons nuls aux positions des composantes du vecteur de taille N qui correspondent aux canaux dans lesquels on ne souhaite pas émettre.

La f igure 7 représente la partie réception MRX du modem MDM, selon un mode de réalisation. La partie réception MRX reçoit des signaux numériques yi en bande de base. La partie réception MRX comprend N filtres PF'₀-PF'_{N-1} par exemple de type polyphase (comme ceux de la partie émission MTX), un circuit de transformation DFT, un circuit de conversion parallèle / série PS, un circuit de démodulation DMD, et des modules de désentrelacement DTL, de décodage DCD et de désembrouillage DSB.

Chacun des filtres PF'₀-PF'_{N-1} présente un gabarit configuré pour laisser passer les signaux situés dans le canal de sous-porteuse respectif correspondant parmi les N canaux de sous-porteuse, et atténuer les signaux situés en dehors de ce canal. Les filtres PF'₀-PF'_{N-1} sont par exemple de type polyphase, comme ceux de la partie émission MTX. Chaque filtre PF'₀-PF'_{N-1} fournit donc une composante respective y_{I,j} (j=0, ..., N-1) d'un vecteur y_{I} de taille N, correspondant à une sous-porteuse. Les échantillons temporels y_{I,0} - y_{I,N-1} sont transformées du domaine temporel au domaine fréquentiel par le circuit de transformation DFT, par exemple en appliquant une transformée spectrale d'ordre N aux échantillons fréquentiels Y_{I,0} - Y_{I,N-1}. La transformée spectrale peut être par exemple une transformée de Fourier rapide ou une transformée en ondelettes. Les échantillons fréquentiels Y_{I,0} - Y_{I,N-1} sont regroupés par le circuit sérialiseur PS en un flux binaire Yi qui est traité successivement par le circuit de démodulation DMD, le module de désentrelacement DTL, le module de décodage DCD et le module de désembrouillage DSB. Les circuit DMD et DTL appliquent des traitements inverses à ceux réalisés par les circuits INTL et MOD. Le décodeur DCD décode les données désentrelacées en effectuant si nécessaire et si possible des corrections d'erreurs de transmission à l'aide des données de redondance. Le module de désembrouillage DSB applique un traitement inverse à celui réalisé par le module d'embrouillage SCB.

A titre d'exemple, le nombre N de sous-porteuses peut être fixé à 512, le nombre de canaux de transmission dans la bande d'émission attribuée peut être fixé à 8, 16 ou 32 canaux.

Comme le modem MDM ne traite que des signaux numériques, il peut être entièrement réalisé par un processeur du type microprocesseur commandé par un programme ou réalisé par un circuit programmable tel qu'un FPGA ("Field-Programmable Gate Array").

Les modules d'embrouillage SCB et de codage CD peuvent nécessiter une puissance de calcul élevée. Si le circuit programmable présente une puissance de calcul insuffisante, les modules SCB et CD peuvent être dupliqués pour ne traiter qu'une partie des données à transmettre, les autres parties des données à transmettre étant traitées en parallèle par d'autres modules SCB et CD dupliqués.

La figure 8 représente un mode de réalisation d'un étage numérique de conversion NST et d'un étage analogique AST du système de transmission. L'étage numérique NST comprend un étage de conversion TCNV en émission et un étage de conversion RCNV en réception. L'étage de conversion TCNV est configuré pour convertir le signal numérique xᵢ à émettre en bande de base en sortie du modem MDM en un signal analogique translaté d'une fréquence intermédiaire IF. A cet effet, l'étage de conversion TCNV comprend un oscillateur numérique NO1 connecté à un mélangeur numérique de fréquence FM, et un convertisseur numérique / analogique DAC. Le mélangeur FM ajoute à la fréquence des échantillons de sortie xᵢ du modem MDM la fréquence intermédiaire IF générée par l'oscillateur NO1, et le convertisseur DAC convertit le signal de sortie du mélangeur de fréquence FM, en un signal analogique qui peut ensuite être traité par l'étage analogique AST.

Ainsi, les signaux modulés dans les différents canaux de transmission sont générés en un unique signal temporel numérique. Ce signal numérique est ensuite translaté de la fréquence intermédiaire IF toujours dans le domaine numérique, avant d'être converti dans le domaine analogique en sortie de l'étage de conversion TCNV. Il en résulte que tous les signaux modulés dans les différents canaux de transmission en sortie du modem MDM peuvent être transportés par une seule liaison jusqu'à l'étage numérique NST. On s'affranchit ainsi des contraintes de réalisation posées par les systèmes de transmission analogiques traditionnels qui imposent de disposer, pour chaque canal émis, d'un modem, d'un convertisseur numérique analogique, d'un câble coaxial transportant le signal à une fréquence intermédiaire basse pour en limiter les pertes et d'une unité externe ODU (f igure 1).

L'étage analogique AST comprend une chaine d'émission TXC, une chaine de réception RXC et un duplexeur DX couplant les chaines TXC, RXC à une antenne AT. La chaine d'émission TXC reçoit le signal analogique x(t) en sortie du convertisseur DAC de l'étage de conversion TCNV. La chaine d'émission TXC comprend un oscillateur local LO1, un mélangeur de fréquence FM1, un amplificateur PA, et deux filtres passe-bande BPF1, BPF2. L'oscillateur LO1 génère un signal à la fréquence intermédiaire RF qu'il transmet au mélangeur FM1. Le signal analogique en sortie de l'étage TCNV est translaté à la fréquence finale RF+IF par le mélangeur FM1, puis filtré par le filtre passe-bande BPF1 avant d'être amplifié par l'amplificateur PA. Le signal amplifié en sortie de l'amplificateur PA est filtré par le filtre BPF2 avant d'être transmis à l'antenne AT au travers du duplexeur DX. Le filtre BPF2 a pour fonction de protéger la chaine de réception RXC des interférences causées par le signal d'émission qui pourrait "éblouir" ou désensibiliser la chaine de réception RXC.

La chaine de réception RXC comprend un amplificateur LNA à faible bruit, un mélangeur de fréquence FM2, un oscillateur local contrôlé en tension LO2, et deux filtres passe-bande BPF3, BPF4. Le filtre BPF3 reçoit des signaux provenant de l'antenne AT et transmis par le duplexeur DX. Les signaux filtrés en sortie du filtre BPF3 sont amplifiés par l'amplificateur LNA, puis translatés d'une fréquence intermédiaire IF' par le mélangeur FM2 recevant par ailleurs une fréquence RF' de l'oscillateur LO2. Les signaux translatés de la fréquence intermédiaire fournis par le mélangeur FM2 sont filtrés par un filtre passe-bande BPF4 avant d'être transmis à l'étage de conversion RCNV. Le filtre BPF3 peut avoir un gabarit similaire au gabarit G2, mais ne laissant passer que la bande RXB (centré sur la fréquence IF'+RF'). Le filtre BPF4 peut avoir le gabarit G1 de manière à rejeter les signaux ayant des fréquences inférieures ou égales à la fréquence intermédiaire RF'.

L'étage de conversion RCNV en réception reçoit les signaux analogiques y(t) translatés à la fréquence intermédiaire, fournis par le filtre BPF4. L'étage de conversion RCNV est configuré pour convertir le signal analogique y(t) en bande de base et générer des signaux numériques yi susceptibles d'être traités par le modem MDM. A cet effet, l'étage de conversion RCNV comprend un convertisseur analogique / numérique ADC connecté à un mélangeur de fréquence numérique FM3 recevant par ailleurs la fréquence intermédiaire IF' d'un oscillateur numérique NO2 à commande numérique. Le convertisseur ADC convertit le signal y(t) en échantillons numériques. Le mélangeur de fréquence FM3 abaisse la fréquence des échantillons, de la fréquence intermédiaire à la bande de base. Les échantillons yi en bande de base sont transmis à la partie réception MRX du modem MDM.

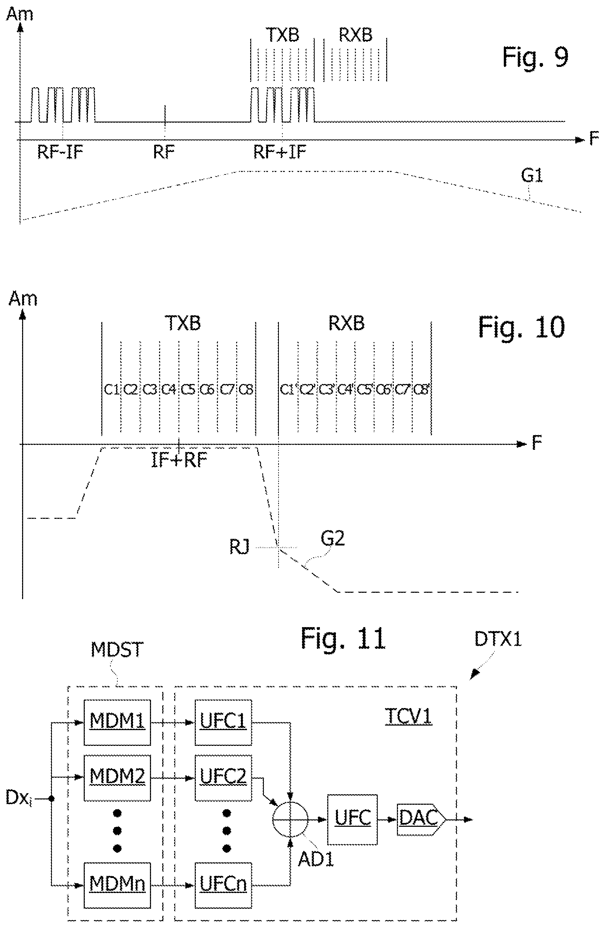

Le filtre BPF1 permet d'obtenir une seule image utile du signal en sortie du mélangeur FM1. La figure 9 représente le spectre du signal de sortie du mélangeur FM1, ainsi que le gabarit du filtre BPF1. Le signal de sortie du mélangeur FM1 comporte trois composantes, à savoir deux composantes centrées respectivement sur les fréquences RF-IF et RF+IF et modulées par le signal analogique issu de l'étage TCNV, et une composante à la fréquence RF. Dans l'exemple de la figure 9, le filtre BPF1 permet d'éliminer l'image du signal modulé centrée sur la fréquence RF-IF et la composante à la fréquence RF.

Selon un mode de réalisation, la fréquence intermédiaire IF est fixée à une valeur supérieure à 1 GHz. Par exemple, pour une bande d'émission située autour de 18 GHz et ayant une largeur typique de 1 GHz, la fréquence IF est fixée à au moins 2 GHz. Il est alors possible d'utiliser uniquement un filtre BPF2, le filtre BPF1 devenant alors accessoire, pour rejeter la bande de fréquences d'émission complète.

En fixant la fréquence intermédiaire IF à une valeur relativement élevée, supérieure à 1 GHz, il est possible de mettre en œuvre un filtre (BPF1) relativement peu coûteux. En effet, le choix d'une fréquence intermédiaire IF relativement élevée permet de réduire la sélectivité du filtre BPF1 par rapport au filtre BF2 (f igure1). Ainsi, le filtre BPF1 peut présenter une sélectivité de 20 dB à la fréquence RF. Le filtre BPF1 peut donc être réalisé à l'aide d'une technologie bien moins coûteuse que celle des filtres à cavité, comme la technologie à micro-ruban. En outre, comme le besoin de réjection est plus faible, il est possible de placer le filtre BPF1 avant l'amplificateur PA, alors qu'il est nécessaire dans les systèmes du type de la figure 1 de placer le filtre BF2 après l'amplificateur A1.

La figure 9 représente également une bande de fréquences TXB attribuée à l'émission, subdivisée en canaux d'émission et centrée sur la fréquence RF+IF, et une bande de fréquences RXB attribuée à la réception, également subdivisée en canaux de réception, et placée en dehors de la bande de fréquences TXB.

A titre d'exemple, les fréquences intermédiaire IF et finale RF+IF sont respectivement égales à 1,5 GHz et 11GHz, et la largeur de la bande d'émission TXB est de 480 MHz, entre 10,76 et 11,24 GHz. La fréquence RF est donc fixée à 9,5 GHz. Le filtre BPF1 peut donc être configuré pour rejeter les fréquences inférieures à 10 GHz pour atteindre un taux de réjection à la fréquence RF de 9,5 GHz de 20 dB.

Comme la fréquence du signal analogique de sortie de l'étage de conversion TCNV est relativement élevée (autour de la fréquence IF), supérieure aux fréquences de signaux transmissibles par câble de plusieurs mètres, il est souhaitable de limiter la longueur de la liaison entre la sortie de l'étage de conversion TCNV et l'étage analogique AST. L'étage numérique de conversion NST peut alors être placé dans une même unité externe EXU avec l'étage analogique AST. En revanche, les signaux à transmettre entre le modem MDM et l'étage de conversion NST, sont des signaux numériques donc moins sensibles au bruit. Ces signaux numériques peuvent donc être transmis sur une relativement plus longue distance que les signaux transitant entre l'étage de conversion NST et l'étage analogique AST. Ainsi, la liaison entre le modem MDM et l'étage de conversion TCNV peut être réalisée par câble coaxial ou par fibre optique.

La f igure 10 représente plus en détail les canaux de transmission C1-C8 et C1'-C8' situés dans les bandes de fréquences TXB, RXB attribuées respectivement à l'émission et à la réception, ainsi que le gabarit G2 du filtre BPF2. Le filtre BPF2 est configuré pour présenter un gabarit large bande, laissant passer l'ensemble de la bande de fréquences TXB attribuée à l'émission, et ayant une réjection RJ suffisante dans la bande de fréquences attribuée à la réception RXB. En particulier, la réjection RJ du filtre BPF2 dans la bande RXB attribuée à la réception est significativement inférieure (au moins 6dB) à l'amplitude du signal minimum reçu par la chaine de réception RXC diminuée du rapport signal sur bruit de la modulation choisie. Les propriétés requises pour le filtre BPF2 peuvent être obtenues par un filtre à cavité. Cependant, il convient d'observer que la sélectivité requise pour le filtre BPF2 est bien moindre que celle requise pour les filtres BF1, BF2 (fIgure 3) qui doivent laisser passer un seul canal de transmission et rejeter les canaux adjacents.

De même, la fréquence intermédiaire IF' utilisée dans la chaine de réception RXC peut également être fixée à une valeur supérieure à 1 GHz. Ici encore, le choix d'une fréquence intermédiaire IF' relativement élevée permet de réaliser le filtre BPF4 avec une sélectivité relativement faible, par exemple 20 dB à la fréquence RF'. Le filtre BPF4 peut donc être réalisé à l'aide d'une technologie bien moins coûteuse que celle des filtres à cavité, comme la technologie à micro-ruban.

Le système de transmission formé du modem MDM, et de l'unité externe EXU permet d'effectuer des transmissions multi-canaux dans les bandes micro-onde en configurant par logiciel les différents canaux de transmission et les canaux de sous-porteuses. Il est donc possible de modifier dynamiquement la configuration des différents canaux et sous-porteuses, l'architecture matérielle du système de transmission ne dépendant que du nombre de sous-porteuses (défini par l'ordre des transformées spectrales)
et de la bande de transmission attribuée (fréquence RF), et non plus de la configuration des canaux.

Au contraire, les systèmes traditionnels imposent, en combinant les porteuses en analogique et en fréquence finale, d'utiliser des filtres à cavité couteux qui doivent obligatoirement être fabriqués en fonction de la configuration fréquentielle des différents canaux de transmission.

Ainsi, la configuration du système de transmission formé des étages MDM et EXU permet de réduire fortement les coûts de fabrication, et de réduire très fortement la durée de fabrication et d'assemblage d'un système multi-canaux. En effet, le système peut être fabriqué et stocké, et la configuration des porteuses qui est effectuée uniquement par logiciel, peut être effectuée à la suite de l'installation du système.

Le système de transmission formé des étages MDM et EXU présente également l'avantage d'utiliser la totalité de la puissance de transmission de l'étage d'amplification PA pour émettre les signaux dans les différents canaux de transmission. Au contraire, une grande partie de la puissance générée dans les systèmes traditionnels est dissipée dans des filtres à cavité et des circulateurs. Il peut ainsi être envisagé d'atteindre des distances de transmission bien plus grandes qu'avec les systèmes traditionnels.

Par ailleurs, comme il n'est pas nécessaire d'avoir à utiliser des filtres à cavité couvrant un seul canal de transmission, il devient possible d'utiliser des bandes de fréquences plus élevées, en particulier dans les bandes à 15 GHz, 18 GHz, 23 GHz et au-delà, sachant qu'il est possible de réaliser des filtres à cavité ayant les propriétés requises pour les filtres BPF1 et BPF2 à ces fréquences.

Il peut être souhaitable d'effectuer une transmission dans plusieurs bandes de fréquences non contiguës. Ainsi, la figure 11 représente une chaine d'émission DTX1 d'un système de transmission multi-canaux, selon un autre mode de réalisation. La chaine d'émission DTX1 comprend un étage de modems MDST et un étage de conversion TCV1 remplaçant l'étage de conversion TCNV. L'étage de modems MDST comprend plusieurs modems MDM1, MDM2, ... MDMn, pouvant être identiques au modem MDM décrit en référence aux figures 4 et 7. L'étage de conversion TCV1 comprend des convertisseurs de fréquence à commande numérique UFC, UFC1, UFC2, ... UFCn et un convertisseur numérique / analogique DAC. Chaque convertisseur de fréquence UFC, UFC1-UFCn comprend un mélangeur de fréquence numérique connecté à un oscillateur numérique à commande numérique. Chaque convertisseur de fréquence UFC1-UFCn est connecté à la sortie d'un des modems MDM1-MDMn.

Chaque modem MDM1-MDMn de l'étage de modems MDST reçoit des données à transporter Dxᵢ sous forme binaire, et fourni des échantillons en bande de base dans plusieurs canaux adjacents, à un convertisseur UFC1-UFCn respectif. Chaque modem MDM1-MDMn génère des échantillons dans un ensemble de canaux respectif. Chaque convertisseur UFC1-UFCn élève la fréquence des échantillons de sortie du modem MDM1-MDMn à une première fréquence intermédiaire respective centrée dans sur bande de fréquence respective, les bandes de fréquences ainsi attribuées aux échantillons de sortie des modems étant espacées les unes des autres, de manière à ce que, après translation à la fréquence RF, les signaux en sortie de chacun des modems MDM1-MDMn soient situés dans la bande de fréquences attribuée au modem. Les bandes de fréquences ainsi attribuées respectivement aux modems MDM1-MDMn peuvent être non contiguës, c'est-à-dire séparées par des bandes de fréquences à ne pas utiliser. Les échantillons en sortie des convertisseurs UFC1-UFCn sont additionnés par un additionneur ADD en un unique flux d'échantillons qui est traité par le convertisseur UFC pour élever la fréquence des échantillons de sortie des convertisseurs UFC1-UFCn à la fréquence intermédiaire. Le convertisseur DAC convertit le signal de sortie du convertisseur UFC en un signal analogique qui peut ensuite être traité par l'étage analogique AST.

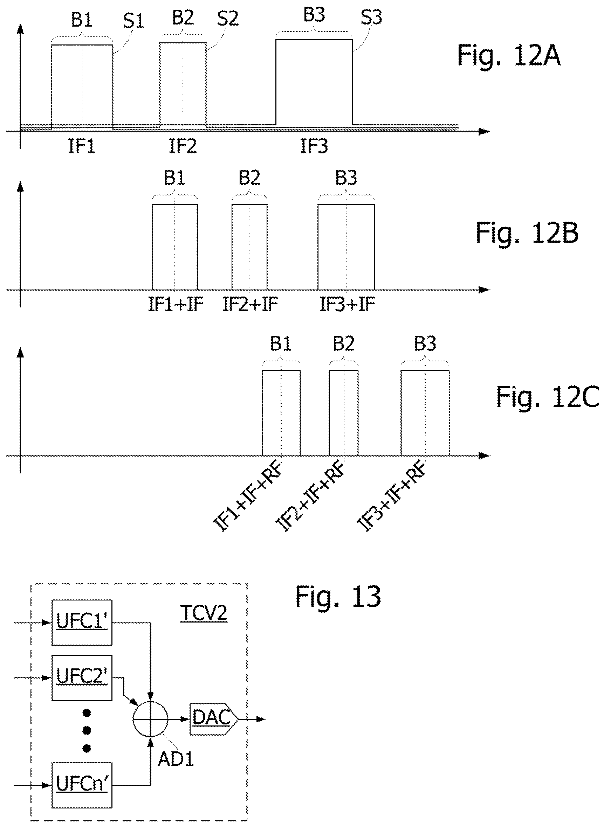

Les figures 12A, 12B, 12C représentent respectivement des exemples de spectres de signaux de sortie des convertisseurs UFC1-UFCn, avec n = 3, du signal de sortie du convertisseur UFC, et du signal de sortie du convertisseur FM1 de l'étage AST, le signal de sortie du convertisseur UFC étant traité par l'étage analogique AST. Les échelles des fréquences (en abscisse) utilisées respectivement dans les figures 12A, 12B, 12C sont différentes. Sur la figure 12A, les spectres S1, S2, S3 des signaux générés respectivement par les convertisseurs UFC1, UFC2 et UFC3 sont superposés, et comprennent respectivement une bande de fréquence B1 centrée sur la fréquence intermédiaire IF1 utilisée par le convertisseur UFC1, une bande de fréquence B2 centrée sur la fréquence intermédiaire IF2 utilisée par le convertisseur UFC2, et une bande de fréquence B3 centrée sur la fréquence intermédiaire IF3 utilisée par le convertisseur UFC3. Les bandes de fréquences B1, B2, B3 peuvent présenter des largeurs différentes et être subdivisées en des nombres de canaux différents.

Sur la figure 12B qui représente le signal de sortie du convertisseur UFC, les bandes de fréquences B1, B2, B3 sont centrées respectivement sur les fréquences IF1+IF, IF2+IF et IF3+IF. Sur la figure 12C qui représente le spectre du signal de sortie du convertisseur de fréquence FM1, les bandes de fréquences B1, B2, B3 sont centrées respectivement sur les fréquences IF1+IF+RF, IF2+IF+RF et IF3+IF+RF.

Il peut être observé que le convertisseur UFC1 peut être omis, le signal de sortie du modem MDM1, en bande de base, étant alors directement fourni au convertisseur UFC. Selon un autre mode de réalisation illustré par la f igure 13 représentant un étage de conversion TCV2, le convertisseur UFC est omis. Ainsi, l'étage de conversion TCV2 diffère de l'étage de conversion TCV1 en ce qu'il comprend des convertisseurs de fréquence UFC1', UFC2', UFCn' connectés à l'additionneur ADD, et en ce que l'additionneur ADD est connecté directement au convertisseur DAC. Les convertisseurs UFC1'-UFCn' sont connectés chacun à un modem MDM1-MDMn respectif et fournissent chacun un signal numérique directement dans la bande de fréquences finale de sortie de l'étage de conversion TCV1. Dans ce cas, la figure 12A représente les spectres des signaux avant d'être combinés par l'additionneur AD1, l'étape de translation de fréquence illustrée par la f igure 12B est omise, et les fréquences centrales des bandes B1, B2, B3 sur la figure 12C sont respectivement égales à IF1+RF, IF2+RF et IF3+RF.

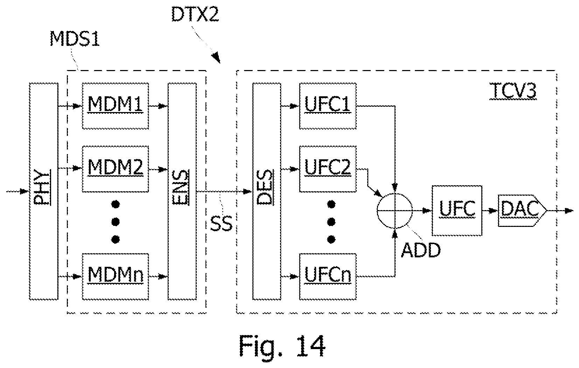

La fréquence du signal analogique de sortie de l'étage de conversion TCNV, TCV1, TCV2 est relativement élevée. L'étage de conversion TCNV, TCV1, TCV2 peut être placé dans une unité externe avec l'étage analogique AST pour être placé au plus près de l'antenne AT. Cependant, si le nombre de modems dans l'étage de modulation MDST est élevé, le nombre de liaisons avec l'étage de conversion est également élevé. Il peut donc être souhaitable de limiter ce nombre de liaisons. Ainsi, la figure 14 représente la chaine d'émission DTX2 d'un système de transmission multi-canal, selon un autre mode de réalisation. La chaine d'émission de la figure 14 comprend un étage de modulation MDS1 et un étage conversion TCV3. L'étage de modulation MDS1 diffère de l'étage MDST en ce qui comprend un circuit de sérialisation ENS configuré pour générer un signal série unique SS dans lequel les signaux de sortie des modems MDM1-MDMn sont multiplexés. L'étage de conversion TCV3 diffère de l'étage TCV1 en ce qui comprend un circuit de désérialisation DES connecté au circuit de sérialisation ENS et configuré pour extraire du signal série SS les différents signaux issus des modems MDM1 et les transmettre aux convertisseurs UFC1-UFCn, le signal issu du modem MDMi étant transmis au convertisseur UFCi, i = 1, ..., n. Ainsi, l'étage de modulation MDS1 peut être placé dans un local facilement accessible et l'étage TCV3 peut être placé avec l'étage analogique AST au plus près de l'antenne AT, les étages MDS1 et TCV2 étant reliés entre eux par une simple liaison série SS.

Selon un mode de réalisation, la liaison série SS peut être établie au moyen d'une fibre optique. Par ailleurs, l'étage de conversion TCV3 peut ne pas comporter de convertisseur UFC1 ou comporter uniquement les convertisseurs UFC1'-UFCn'.

Selon un mode de réalisation, les convertisseurs ENS et DES sont implémentés avec des composants JES204B commercialisé par Texas Instruments^{™} comportant un comportant un composant émetteur côté modems et un composant récepteur implémentant l'un ou l'autre des convertisseurs TCV1, TCV2, TCV3.

Il apparaîtra clairement à l'homme de l'art que la présente invention est susceptible de diverses variantes de réalisation et diverses applications. En particulier, l'invention n'est pas limitée à la prévision des traitements de filtrage par canal de sous-porteuse, en émission, à la suite de la transformation spectrale inverse, et en réception avant la transformation spectrale. En effet, il peut être prévu que le modem insère des préfixes cycliques à l'émission et retire ces préfixes cycliques à la réception.

Il n'est pas non plus nécessaire que la liaison entre le modem MDM ou l'ensemble de modems MDST, MDS1, d'une part et d'autre part, le convertisseur TCV1, TCV2, TCV3, soit réalisé par une fibre optique. En effet, l'usage d'une telle liaison permet de s'affranchir de baisses de qualité des signaux transmis notamment lorsque ces équipements sont éloignés les uns des autres. Si ces équipements sont installés proches les uns des autres, la perte de qualité des signaux transmis est insignifiante.

Dans l'exemple des figures 8 à 10, la fréquence finale ou le centre de la bande de transmission est égale à la somme des fréquences intermédiaires IF et RF (ou RF' et IF'). Il va de soi que la fréquence finale retenue puisse être la fréquence RF-IF (ou RF'-IF'), notamment selon les bandes de fréquence de transmission et de réception visées. Ainsi, la fréquence finale peut être choisie de manière à ce qu'aucune des images RF-IF, RF et RF+IF de la translation de fréquence (FM1) ne se trouve dans la bande de réception. Dans le cas où la bande de réception est située à des fréquences plus élevées que la bande d'émission TXB, il est donc avantageux de choisir pour fréquence finale de la bande d'émission, la fréquence RF+IF. Dans le cas où la bande de réception est située à des fréquences plus basses que la bande d'émission TXB, il est avantageux de choisir pour fréquence finale de la bande d'émission la fréquence RF-IF. Dans ce dernier cas, les filtres BPF1, BPF2 précédemment décrits devront être adaptés pour rejeter la fréquence RF et une bande de fréquence autour de la fréquence RF+IF. Cette disposition est également applicable aux modes de réalisation des figures 11 à 14 mettant en œuvre des fréquences intermédiaires RF, IF, IF1, IF2, IF3.

## Revendications

1. Procédé de transmission de données multicanaux, comprenant des étapes consistant à :
générer à partir d'un flux de données à émettre (Dxᵢ), une pluralité de flux d'échantillons numériques fréquentiels (X_{I,j}), chaque flux d'échantillons numériques modulant une sous-porteuse respective définissant un canal de sous-porteuse (CPj) respectif,
distribuer les canaux de sous-porteuses (CPj) sur plusieurs canaux de transmission consécutifs (C1-C8) ayant une largeur d'au moins 3,5 MHz,
attribuer des flux d'échantillons nuls aux sous-porteuses de canaux de transmission non utilisés (C2),
convertir les flux d'échantillons numériques fréquentiels en des flux de symboles numériques temporels (x_{I,j}), par une transformée spectrale inverse (IDFT), sans insérer de préfixes cycliques entre les symboles,
filtrer chaque flux de symboles numériques temporels (x_{I,j}) par un filtre numérique (PFⱼ) respectif,
combiner les flux de symboles numériques temporels filtrés en un flux composite de symboles numériques temporels (xᵢ),
translater en fréquence le flux composite de symboles numériques temporels, à l'aide d'un oscillateur numérique (NO1) à une fréquence intermédiaire supérieure à 1 GHz,
convertir le flux composite de symboles translaté en un signal analogique (x(t)),
translater en fréquence le signal analogique à une fréquence finale (RF+IF) de transmission supérieure à 2 GHz, à l'aide d'un oscillateur analogique (LO1) à une fréquence de translation (RF),
filtrer le signal analogique afin d'atténuer la fréquence de translation, et
émettre le signal analogique translaté par une antenne (AT).

2. Procédé selon la revendication 1, dans lequel le flux composite de symboles numériques temporels (xᵢ) est transmis par une liaison optique avant d'être translaté à la fréquence intermédiaire (IF).

3. Procédé selon la revendications 1-à-4, comprenant des étapes consistant à :
générer en parallèle plusieurs autres flux composites de symboles numériques temporels, et
translater chacun des autres flux composites de symboles numériques temporels, vers une fréquence intermédiaire respective (IF1, IF2, IF3) à l'aide d'un oscillateur numérique respectif (UFC1-UFCn), chacun des flux composites de symboles numériques temporels translaté étant transmis sous forme analogique dans une bande de fréquences (B1, B2, B3) respective.

4. Procédé selon la revendications 1, dans lequel le flux de données (Dxᵢ) à émettre subit un traitement d'embrouillage (SCB) pour que des bits du flux présentent une distribution aléatoire, un traitement de codage (COD) pour introduire dans le flux des données de redondance ou de correction d'erreur, un traitement d'entrelacement (INTL) formant un flux de blocs de données, et un traitement de modulation (MOD) pour transformer le flux de blocs de données en un flux d'échantillons fréquentiels (Xᵢ) sous forme de nombres complexes.

5. Procédé selon la revendication 64, dans lequel les traitements d'embrouillage et de codage sont effectués par plusieurs modules d'embrouillage (SCB) et plusieurs modules de codage (COD) en parallèle pour augmenter une cadence de transmission du flux de données transmis au traitement d'entrelacement (INTL).

6. Dispositif de transmission configuré pour mettre en œuvre le procédé selon l'une des revendications 1 à 5.

7. Dispositif selon la revendication 6, comprenant :
un modem (MDM) pour générer le flux composite de symboles numériques temporels (xᵢ),
un convertisseur (TCNV) pour translater le flux composite de symboles numériques temporels, vers la fréquence intermédiaire (IF) et convertir en signaux analogiques (x(t)) le flux composite d'échantillons translaté à la fréquence intermédiaire, et
un étage analogique (AST) connecté à une antenne (AT) pour générer les signaux analogiques translatés.

8. Dispositif selon la revendication 7, dans lequel le modem (MDM) est connecté au convertisseur par une liaison optique.

9. Dispositif selon l'une des revendications 7 et 8, dans lequel le modem appartient à un groupe d'une pluralité de modems (MDM1-MDMn) connectés à une entrée respective du convertisseur (TCV1, TCV2).

10. Dispositif selon la revendication 9, comprenant :
un circuit de conversion parallèle / série (ENS) comprenant une pluralité d'entrées connectées respectivement aux modems (MDM1-MDMn), et
un circuit de conversion série / parallèle (DES) relié au circuit de conversion parallèle / série par une liaison à fibre optique (SS) et comprenant une sortie par modem connectée à l'entrée d'un circuit de conversion de fréquence (UFC1-UFCn) respectif pour translater le flux composite de symboles numériques temporels (xᵢ) fourni par un modem respectif, vers une fréquence intermédiaire (IF1, IF2, IF3) respective.

11. Dispositif selon l'une des revendications 7 à 10, dans lequel chaque modem (MDM, MDM1-MDMn) est réalisé par un processeur commandé par un programme ou un circuit programmable.

## Patentansprüche

1. Verfahren zum Übertragen von Mehrkanaldaten, umfassend Schritte, bestehend aus:
Erzeugen aus einem Strom von zu sendenden Daten (Dxᵢ) einer Vielzahl von Strömen von digitalen Frequenzproben (X_{I,j}), wobei jeder Strom von digitalen Proben einen jeweiligen Unterträger moduliert, der einen jeweiligen Unterträgerkanal (CPj) definiert,
Verteilen der Unterträgerkanäle (CPj) auf mehrere aufeinanderfolgende Übertragungskanäle (C1-C8), die eine Breite von mindestens 3,5 MHz besitzen,
Zuordnen von Nullprobenströmen zu nicht verwendeten Übertragungskanalunterträgern (C2),
Umwandeln der Ströme von digitalen Frequenzproben in Ströme von zeitlichen digitalen Symbolen (x_{I,j}) durch eine inverse Spektraltransformation (IDFT), ohne zyklische Präfixe zwischen den Symbolen einzufügen,
Filtern jedes Stroms von zeitlichen digitalen Symbolen (x_{I,j}) durch ein jeweiliges digitales Filter (PFⱼ),
Kombinieren der Strömen von gefilterten Strömen von zeitlichen digitalen Symbolen zu einem zusammengesetzten Strom von zeitlichen digitalen Symbolen (xᵢ),
Frequenzverschieben des zusammengesetzten Stroms von zeitlichen digitalen Symbolen mit Hilfe eines digitalen Oszillators (NO1) auf eine Zwischenfrequenz über 1 GHz,
Umwandeln des zusammengesetzten Stroms von Symbolen in ein analoges Signal (x(t)),
Frequenzverschieben des analogen Signals auf eine Endfrequenz (RF+IF) der Übertragung von mehr als 2 GHz, mit Hilfe eines analogen Oszillators (LO1) bei einer Verschiebungsfrequenz (RF),
Filtern des analogen Signals, um die Verschiebungsfrequenz zu dämpfen, und
Senden des analogen Signals, das durch eine Antenne (AT) verschoben wird.

2. Verfahren nach Anspruch 1, wobei der zusammengesetzte Strom von zeitlichen digitalen Symbolen (xᵢ) über eine optische Verbindung übertragen wird, bevor er auf die Zwischenfrequenz (IF) verschoben wird.

3. Verfahren nach Anspruch 1, umfassend die Schritte, bestehend aus:
paralleles Erzeugen mehrerer anderer zusammengesetzter Ströme von zeitlichen digitalen Symbolen, und
Verschieben jedes der anderen zusammengesetzten Ströme von zeitlichen digitalen Symbolen zu einer jeweiligen Zwischenfrequenz (IF1, IF2, IF3) mit Hilfe eines jeweiligen digitalen Oszillators (UFC1 - UFCn), wobei jeder der verschobenen zusammengesetzten Ströme von zeitlichen digitalen Symbolen in analoger Form in einem jeweiligen Frequenzband (B1, B2, B3) übertragen wird.

4. Verfahren nach Anspruch 1, wobei der Strom von zu sendenden Daten (Dxᵢ) einer Verwürfelungsbehandlung (SCB), damit Bits des Stroms eine zufällige Verteilung aufweisen, einer Codierungsbehandlung (COD) zum Einführen von Redundanz- oder Fehlerkorrekturdaten in den Strom, einer Verschachtelungsbehandlung (INTL), die einen Strom von Datenblöcken ausbildet, und einer Modulationsbehandlung (MOD) zum Transformieren des Stroms von Datenblöcken in einen Strom von Frequenzproben (Xᵢ) in Form von komplexen Zahlen unterzogen wird.

5. Verfahren nach Anspruch 4, wobei die Verwürfelungs- und Codierungsbehandlungen durch mehrere Verwürfelungsmodule (SCB) und mehrere Codierungsmodule (COD) zum Erhöhen einer Übertragungsrate des Datenstroms, der an die Verschachtelungsbehandlung (INTL) übertragen wird, parallel durchgeführt werden.

6. Übertragungsvorrichtung, die zum Implementieren des Verfahrens nach einem der Ansprüche 1 bis 5 konfiguriert ist.

7. Vorrichtung nach Anspruch 6, umfassend:
ein Modem (MDM) zum Erzeugen des zusammengesetzten Stroms von zeitlichen digitalen Symbolen (xᵢ),
einen Wandler (TCNV) zum Verschieben des zusammengesetzten Stroms von zeitlichen digitalen Symbolen auf die Zwischenfrequenz (IF) und zum Umwandeln des zusammengesetzten Stroms von Proben, der auf die Zwischenfrequenz verschoben wird, in analoge Signale (x(t)), und
eine analoge Stufe (AST), die an eine Antenne (AT) angeschlossen ist, zum Erzeugen der verschobenen analogen Signale.

8. Vorrichtung nach Anspruch 7, wobei das Modem (MDM) über eine optische Verbindung an den Wandler angeschlossen ist.

9. Vorrichtung nach einem der Ansprüche 7 und 8, wobei das Modem zu einer Gruppe einer Vielzahl von Modems (MDM1-MDMn) gehört, die an einen jeweiligen Eingang des Wandlers (TCV1, TCV2) angeschlossen sind.

10. Vorrichtung nach Anspruch 9, umfassend:
eine Parallel-/Serienwandlerschaltung (ENS), umfassend eine Vielzahl von Eingängen, die jeweils an die Modems (MDM1-MDMn) angeschlossen sind, und
eine Serien-/Parallelwandlerschaltung (DES), die mit der Parallel-/Serienwandlerschaltung durch eine Glasfaserverbindung (SS) verbunden ist und umfassend einen Modemausgang, der an den Eingang einer jeweiligen Frequenzwandlerschaltung (UFC1-UFCn) angeschlossen ist, zum Verschieben des zusammengesetzten Stroms von zeitlichen digitalen Symbolen (xᵢ), der durch ein jeweiliges Modem bereitgestellt wird, auf eine jeweilige Zwischenfrequenz (IF1, IF2, IF3).

11. Vorrichtung nach einem der Ansprüche 7 bis 10, wobei jedes Modem (MDM, MDM1-MDMn) durch einen Prozessor, der durch ein Programm gesteuert wird, oder eine programmierbare Schaltung ausgeführt wird.

## Claims

1. A multichannel data transmission method comprising the steps of:
generating from a data stream to be transmitted (Diₓ), a plurality of frequency-domain digital sample streams (X_{I,j}), each digital sample stream modulating a respective subcarrier defining a respective subcarrier channel (CPj),
distributing the subcarrier channels (CPj) over a plurality of consecutive transmission channels (C1-C8) having a width of at least 3.5 MHz,
attributing null sample streams to the subcarriers of unused transmission channels (C2),
converting the frequency-domain digital sample streams into temporal digital symbol streams (x_{I,j}), using an inverse spectral transform (IDFT), without inserting cyclic prefixes between the symbols,
filtering each temporal digital symbol stream (x_{I,j}) by a respective digital filter (PFⱼ),
combining the filtered temporal digital symbol streams into a composite temporal digital symbol stream (xᵢ),
frequency shifting the composite temporal digital symbol stream using a digital oscillator (NO1) to an intermediate frequency above 1 GHz,
converting the shifted composite digital symbol stream into an analog signal (x(t)),
frequency-shifting the analog signal to a transmission frequency (RF+IF) above 2 GHz, using an analog oscillator (LO1) at a carrier frequency (RF),
filtering the analog signal to attenuate the carrier frequency, and
transmitting the shifted analog signal via an antenna (AT).

2. The method according to claim 1, wherein the composite temporal digital symbol stream (xᵢ) is transmitted via an optical link before being shifted to the intermediate frequency (IF).

3. The method according to claim 1, comprising the steps of:
generating a plurality of further composite streams of temporal digital symbols in parallel, and
shifting each of the further composite streams of temporal digital symbols to a respective intermediate frequency (IF1, IF2, IF3) by means of a respective digital oscillator (UFC1-UFCn), each of the shifted composite streams of temporal digital symbols being transmitted in analog form in a respective frequency band (B1, B2, B3).

4. The method according to claim 1, wherein the data stream (Dxᵢ) to be transmitted undergoes scrambling (SCB) so that bits of the stream have a random distribution, coding (COD) to introduce redundancy or error correction data into the stream, interleaving (INTL) to form a stream of data blocks, and modulation (MOD) to transform the stream of data blocks into a stream of frequency-domain samples (Xᵢ) in the form of complex numbers.

5. The method according to claim 4, wherein the scrambling and coding are performed by a plurality of scrambling modules (SCB) and a plurality of coding modules (COD) in parallel to increase a transmission rate of the data stream transmitted for interleaving (INTL).

6. A transmission device configured to implement the method according to any of claims 1 to 5.

7. A device according to claim 6, comprising:
a modem (MDM) for generating the composite temporal digital symbol stream (xᵢ),
a converter (TCNV) for shifting the composite temporal digital symbol stream to the intermediate frequency (IF) and converting the composite symbol stream shifted to the intermediate frequency into analog signals (x(t)), and
an analog stage (AST) connected to an antenna (AT) for generating the shifted analog signals.

8. The device according to claim 7, wherein the modem (MDM) is connected to the converter by an optical link.

9. The device according to one of claims 7 and 8, wherein the modem belongs to a group of a plurality of modems (MDM1-MDMn) connected to a respective input of the converter (TCV1, TCV2).

10. The device according to claim 9, comprising:
a parallel/serial conversion circuit (ENS) comprising a plurality of inputs connected respectively to the modems (MDM1-MDMn), and
a serial-to-parallel conversion circuit (DES) connected to the parallel-to-serial conversion circuit by a fiber optic link (SS) and comprising one output per modem connected to the input of a respective frequency conversion circuit (UFC1-UFCn) for shifting the composite temporal digital symbol stream (xᵢ) supplied by a respective modem, to a respective intermediate frequency (IF1, IF2, IF3).

11. The device according to one of claims 7 to 10, wherein each modem (MDM, MDM1-MDMn) is implemented by a processor controlled by a program or by a programmable circuit.
